# EUROPEAN PATENT APPLICATION

(11) **EP 1 603 180 A1**
(43) Date of publication of application: **07.12.2005**
(21) Application number: 04425392.0
(22) Date of filing: 31.05.2004
(51) Int. Cl.: H01M 8/04, F01D 15/02, F04D 25/02

(54) **Recirculating assembly for a fuel cell system**

(71) Applicant: C.R.F. Società Consortile per Azioni, 10043 Orbassano (Torino) (IT)
(72) Inventor: Delzanno, Paolo c/o C.R.F. Società C. per Azioni, 10043 Orbassano (IT); Marchese, Paolo c/o C.R.F. Società C. per Azioni, 10043 Orbassano (IT); Caenazzo, Dario c/o C.R.F. Società C. per Azioni, 10043 Orbassano (IT); Pesola, Fabio c/o C.R.F. Società C. per Azioni, 10043 Orbassano (IT)
(74) Representative: Jorio, Paolo

(57) **Abstract**

There is described a recirculating assembly (4) for a fuel cell system (1) having an electrochemical conversion unit (2) which receives a combustible fluid at the inlet, and supplies electric energy, surplus combustible fluid, and a waste fluid at the outlet. The recirculating assembly (4) has a compressor (12) for increasing the pressure of the surplus combustible fluid not used by the conversion unit (2), so as to make it once more available to the conversion unit (2); and a turbine (11) for driving the compressor (12) and powered by the residual energy in the waste fluid from the conversion unit (2).

## Description

The present invention relates to a recirculating assembly for fuel cell systems.

The following description refers, purely by way of example, to earth vehicle applications.

Fuel cell systems are known for converting chemical to electric energy capable of supplying mechanical energy to an earth vehicle by means of an electric drive motor. In view of the zero pollution factor and high energy efficiency of fuel cell systems, they are a valid alternative to internal combustion engines as a means of driving earth vehicles.

A fuel cell system substantially comprises a fuel cell electrochemical conversion unit; a fuel tank supplying the conversion unit; and an electric circuit supplied by the conversion unit. To convert the chemical energy stored in the fuel to electric energy for powering the electric drive motor, a fuel-oxidizing agent is required.

In earth vehicle applications, in particular, the electrochemical conversion unit is defined by a number of individual fuel cells connected electrically in series to increase the electric energy generated by the system.

More specifically, each fuel cell comprises an anode and a cathode, between which is interposed an electrolyte, and on which appropriate reaction catalysts are provided. In PEM (proton exchange membrane) fuel cell systems, to which the following description refers purely by way of example, the electrolytes used for driving earth vehicles are defined by a polymer membrane permeable to protons and impermeable to electrons.

In known systems, the fuel is hydrogen, and the oxidizing agent is atmospheric oxygen in the air. By means of appropriate conduits, the hydrogen and air respectively supply the anode and cathode of the individual fuel cells defining the electrochemical conversion unit. The hydrogen, with the aid of a first catalyst, ionizes at the anode to produce protons and electrons. The protons migrate to the cathode through the electrolytic membrane permeable to them; and the electrons, to which the electrolytic membrane is impermeable, migrate to the cathode via the external electric circuit, thus generating electric current capable of powering an electric motor and so driving a mechanical rotary member. In the presence of a second catalyst, the oxygen reaching the cathode reacts with the protons from the electrolytic membrane and with the electrons from the external circuit to form steam.

By means of an oxidizing agent (oxygen), the chemical energy of the fuel (hydrogen) is thus convertible to electric energy, with a reaction product in the form of steam together with low-oxygen air and heat.

In a fuel cell system, water is present at both the anode and cathode, and, for the system to function properly, must be distributed evenly inside the fuel cell. This is done, on the anode side, using a system for generating in the circuit a stream of hydrogen capable of distributing the water evenly throughout the fuel cell.

Using compressors or pumps with rotary members and fluidtight seals for this purpose is difficult and not very practical, on account of the small size of the hydrogen molecules, which give rise to particularly dangerous leakage from the seals capable of producing violent explosions even when the fuel cell is idle.

Recirculating assemblies comprising hermetically sealed, powered compressors are known, e.g. as described in US 2003/0077499, but must be supplied with energy by the fuel cell system or an external energy source.

Recirculating assemblies not requiring fluidtight seals for rotary members along the hydrogen conduit are also known, e.g. as described in US 6,013,385, and comprise one or more pressure recovery devices or so-called "eductors" located along the hydrogen conduit, at the output of the fuel cell anode. Such devices comprise a hydrogen pressure recovery nozzle, and an injection conduit for injecting a high-speed fluid into the nozzle. The nozzle comprises a converging-section portion tapering to a narrow section, from which a diverging-section portion originates; and the injection conduit provides for injecting a high-speed fluid from a tank into the narrow section of the nozzle. From the electrochemical conversion unit, the feedback hydrogen thus flows into the converging-section portion of the pressure recovery device nozzle, and, upon injection of the high-speed fluid, undergoes a pressure increase in the diverging-section portion of the nozzle.

A first pressure recovery device is supplied with the feedback hydrogen at the inlet of the converging portion of the nozzle, is fed at the narrow section with high-pressure hydrogen injected from the fuel tank by the injection conduit, and provides for effectively recovering the pressure of the feedback hydrogen when the fuel cell system is in the steady operating condition.

Conversely, correct hydrogen pressure recovery is not possible when hydrogen flow to the conversion unit falls below a predetermined threshold value.

In this case, a second pressure recovery device must be provided, connected pneumatically parallel with the first. The second device is supplied with feedback hydrogen at the converging portion inlet by means of an appropriate regulating valve, and is fed at the narrow section with a fluid, normally water, injected at high speed by the injection conduit, so that a water tank and a power pump to pump the water are required. The limited capacity of the water tank and the need for a motor to drive the water pump therefore reduce the efficiency of the recirculating assembly. Moreover, recirculating assemblies of this sort are of only limited benefit by being complicated to produce, and by still involving a certain amount, albeit reduced, of hydrogen leakage.

To eliminate the above drawbacks, recirculating assemblies, e.g. as described in US 2002/0122969, have been devised comprising a pump located between the hydrogen tank and the electrochemical conversion unit anode. The pump is driven by the pressure of the hydrogen in the tank, and provides for recovering the pressure of the feedback hydrogen by means of a pressure drop between the hydrogen tank and the pump outlet conduit supplying the electrochemical conversion unit.

More specifically, the pump is supplied with hydrogen from the tank at the pressure set by a regulating valve, receives feedback hydrogen from the conversion unit at a lower pressure than required at the conversion unit inlet, and feeds the hydrogen back to the conversion unit at a lower pressure than at the pump inlet, but at a higher pressure than at the conversion unit outlet. Since pressure recovery of the feedback hydrogen between the anode output and input is brought about by the pressure drop between the hydrogen in the tank entering and leaving the pump, recirculating assemblies of the above type withdraw no energy from the fuel cell system, and require no external energy sources.

Though theoretically valid, such systems are difficult to actually produce, by involving fairly considerable cost.

It is an object of the present invention to provide a recirculating assembly for a fuel cell system, designed to eliminate the aforementioned drawbacks typically associated with known assemblies.

According to the present invention, there is provided a recirculating assembly for a fuel cell system, said system comprising an electrochemical conversion unit receiving a combustible fluid at the inlet, and supplying electric energy, surplus combustible fluid, and a waste fluid at the outlet; said recirculating assembly comprising:
- compressor means for increasing the pressure of the surplus combustible fluid not used by said unit, so as to make it once more available to the unit; and
- drive means for driving said compressor means;
characterized in that said drive means are powered by the residual energy of said waste fluid from said unit.

A preferred, non-limiting embodiment of the present invention will be described by way of example with reference to the accompanying drawings, in which:
Figure 1 shows a diagram of a fuel cell system in accordance with the present invention;
Figure 2 shows a larger-scale axial section, with parts removed for clarity, of a portion of the recirculating assembly in Figure 1.

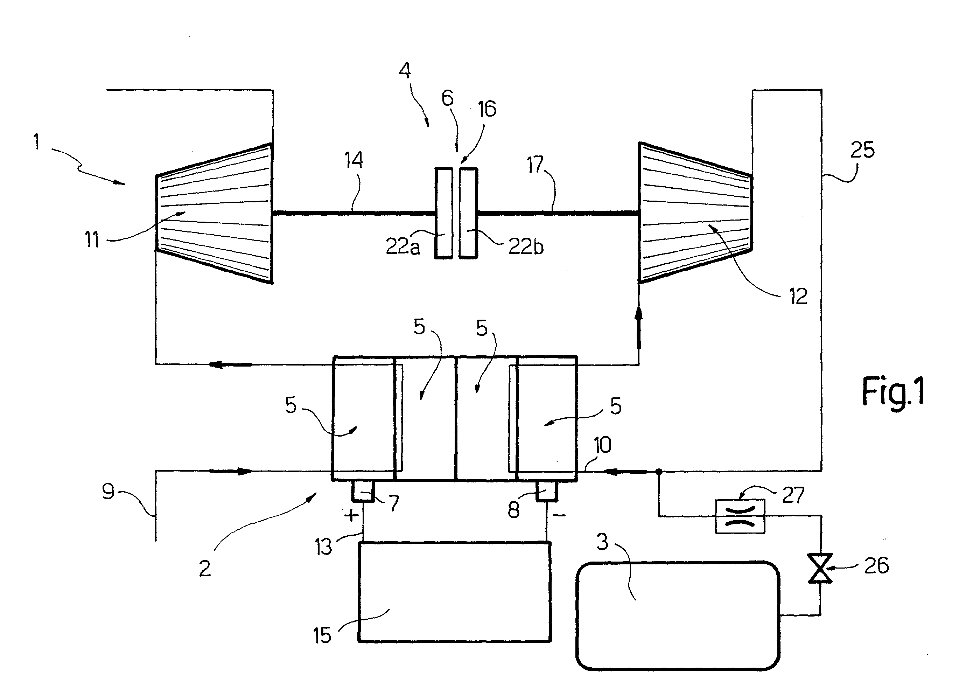

Number 1 in Figure 1 indicates as a whole a fuel cell system for earth vehicles, which comprises a fuel cell electrochemical conversion unit 2; a fuel tank 3 for supplying unit 2; and a recirculating assembly 4 for recirculating surplus fuel not used in the electrochemical conversion.

Unit 2, which is known and therefore only described herein as required for a clear understanding of the present invention, may operate according to any of various known construction designs and technologies, and, in the preferred embodiment described, is a proton exchange membrane (PEM) type employing hydrogen as fuel, and oxygen in atmospheric air as the oxidizing agent. The present invention, however, is not limited to the above type of electrochemical conversion unit, and may be used with electrochemical conversion units of any construction design or technology.

Unit 2 is defined in known manner by a number of stacked fuel cells 5 connected electrically in series, and defines as a whole a cathode 7 and an anode 8. An electric circuit 13 connects cathode 7 and anode 8 of unit 2, and can thus power an electromechanical load 15 - in this case, an electric motor for driving a vehicle - by means of the energy generated by system 1.

Unit 2 is supplied at the inlet with atmospheric air by a conduit 9, and with hydrogen from tank 3 and from recirculating assembly 4 by a conduit 10, as explained in detail later on.

More specifically, the atmospheric air feed conduit 9 enters unit 2 on the cathode 7 side, supplies the individual cells 5 with oxygen, and, on exiting cathode 7, conducts the waste products, defined by steam and low-oxygen air, to recirculating assembly 4. The hydrogen feed conduit 10 enters unit 2 on the anode 8 side, supplies the individual cells 5 with hydrogen, and, on exiting anode 8, conducts the surplus hydrogen to recirculating assembly 4.

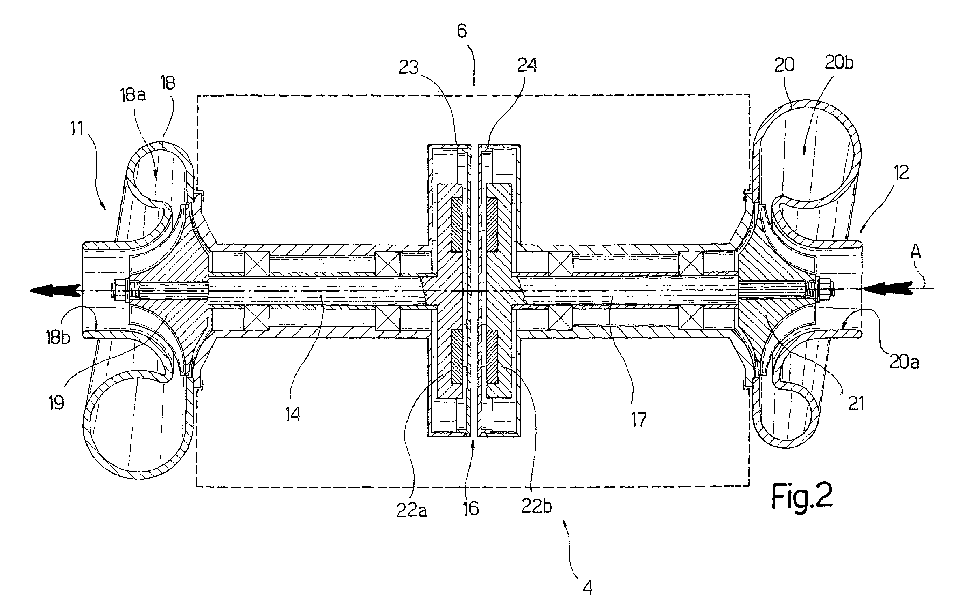

With reference to Figures 1 and 2, recirculating assembly 4 substantially comprises a compressor 12 for compressing the hydrogen from unit 2; and a drive member for driving compressor 12.

An important aspect of the present invention lies in the drive member being defined by a turbine 11 powered by the energy of the waste produces from unit 2.

More specifically, turbine 11 and compressor 12 are angularly connected by a permanent-magnet or electromagnetic joint 16 described in detail later on, and define as a whole a turbocharger 6 of axis A.

Turbine 11 comprises a spiral casing 18, and an impeller 19 rotating about axis A inside casing 18. More specifically, casing 18 defines a circumferential inlet section 18a for the waste products from unit 2; and an outlet section 18b for expelling the products expanded by turbine 11 from system 1.

More specifically, impeller 19 of turbine 11 is fitted to a shaft 14 projecting from turbine 11. In a preferred embodiment of the present invention, impeller 19 may be coated with, or made entirely of, corrosion-resistant material, e.g. teflon, to safeguard against corrosion by the deionized steam in turbine 11. Alternatively, impeller 19 may be surface-treated to resist such corrosion.

Compressor 12 comprises a spiral casing 20, and an impeller 21 rotating about axis A inside casing 20. More specifically, casing 20 defines an axial inlet section 20a for the feedback hydrogen from unit 2; and a circumferential outlet section 20b for feeding the compressed hydrogen to unit 2 along a recirculating conduit 25 connected to conduit 10.

More specifically, impeller 21 is fitted to a shaft 17 projecting from compressor 12 and angularly connectable to shaft 14 by means of joint 16. In a preferred embodiment of the present invention, impeller 21 may be coated with, or made entirely of, corrosion-resistant material, e.g. teflon, to safeguard against corrosion by the deionized steam in compressor 12. Alternatively, impeller 21 may be surface-treated to resist such corrosion.

Joint 16 will be described, purely by way of example, with reference to a known permanent-magnet, axial-flow, electric machine not described in detail. Joint 16 transmits motion from shaft 14 to shaft 17, while keeping them a predetermined axial distance apart, and with no contacting mechanical parts, and, more specifically, comprises a disk 22a fitted to the opposite end of shaft 14 to turbine 11, and a disk 22b fitted to the opposite end of shaft 17 to compressor 12. Disks 22a and 22b have a number of permanent magnets, and are maintained a predetermined axial distance apart.

Using joint 16 as described above, which provides for transmitting motion between shafts 14 and 17 with no mechanical contact, the waste product expansion environment can be separated in fluidtight manner from the recirculated hydrogen compression environment, so that shaft 14 and relative disk 22a are housed in a first casing 23 integral with casing 18 of turbine 11, and shaft 17 and relative disk 22b are housed in a second casing 24 separate from casing 23 and integral with casing 20 of compressor 12.

As such, the hydrogen compressed in compressor 12 and the waste products can in no way react chemically with each other to impair the efficiency of recirculating assembly 4 and, therefore, of system 1.

In actual use, impeller 19 of turbine 11, powered by the waste products from conduit 9, rotates shaft 14 and disk 22a integral with shaft 14; disk 22a rotates disk 22b by means of joint 16, which thus makes rotation about axis A of shaft 14 of turbine 11 angularly integral with similar rotation about axis A of shaft 17 of compressor 12; and disk 22b rotates impeller 21 of compressor 12 by means of shaft 17, so as to increase the pressure of the feedback hydrogen fed to compressor 12 by conduit 10.

The waste products from turbine 11 constitute the exhaust of system 1, whereas the hydrogen from compressor 12 is fed by recirculating conduit 25 into conduit 10 where it mixes with the hydrogen from tank 3 to supply unit 2.

To better regulate system 1, provision may be made, immediately downstream from tank 3, for a regulating valve 26 and a flow gauge 27 for regulating the amount of fuel required to supplement the hydrogen made available to unit 2 by recirculating assembly 4.

The advantages of recirculating assembly 4 according to the present invention will be clear from the foregoing description.

In particular, recirculating assembly 4 employs the residual energy in the waste products to drive shaft 14 by means of turbine 11, and, by means of joint 16, to drive compressor 12 to bring the feedback hydrogen to the pressure necessary to supply unit 2, and therefore requires no additional energy sources.

Recirculating assembly 4 therefore provides for enhancing the efficiency of fuel cell system 1, with no increase in cost or complexity.

Clearly, changes may be made to recirculating assembly 4 as described and illustrated herein without, however, departing from the scope of the accompanying Claims.

## Claims

1. A recirculating assembly (4) for a fuel cell system (1), said system (1) comprising an electrochemical conversion unit (2) receiving a combustible fluid at the inlet, and supplying electric energy, surplus combustible fluid, and a waste fluid at the outlet; said recirculating assembly (4) comprising:
- compressor means (12) for increasing the pressure of the surplus combustible fluid not used by said unit (2), so as to make it once more available to the unit (2); and
- drive means (11) for driving said compressor means (12);
**characterized in that** said drive means (11) are powered by the residual energy of said waste fluid from said unit (2).

2. An assembly as claimed in Claim 1, **characterized by** comprising magnetic or electromagnetic connecting means (16) for angularly connecting said drive means (11) and said compressor means (12).

3. An assembly as claimed in Claim 2, **characterized in that** said connecting means (16) comprise a first and a second coupling portion (22a; 22b) which are integral with said drive means (11) and said compressor means (12) respectively, are coupled magnetically or electromagnetically, and are spaced apart.

4. An assembly as claimed in any one of the foregoing Claims, **characterized in that** said drive means (11) and said compressor means (12) are housed in respective separate casings (18, 23; 20, 24) to prevent said combustible fluid mixing with said waste fluid.

5. An assembly as claimed in any one of the foregoing Claims, **characterized in that** said drive means comprise a turbine (11) having an impeller (19) coated externally with, or made entirely of, corrosion-resistant material, or surface-treated to make it corrosion-resistant.

6. An assembly as claimed in any one of the foregoing Claims, **characterized in that** said compressor means comprise a compressor (12) having an impeller (21) coated externally with, or made entirely of, corrosion-resistant material, or surface-treated to make it corrosion-resistant.

7. A fuel cell system (1) comprising:
- an electrochemical conversion unit (2) receiving a combustible fluid at the inlet, and supplying electric energy, surplus combustible fluid, and a waste fluid at the outlet; and
- a recirculating assembly (4), for recirculating the surplus combustible fluid, as claimed in any one of the foregoing Claims.

## Amended claims

### Amended claims in accordance with Rule 86(2) EPC.

**1.** A recirculating assembly (4) for a fuel cell system (1), said fuel cell system (1) comprising an electrochemical conversion unit (2) configured to receive first and second combustible fluids, and to supply electric energy and surplus of said first and second combustible fluids; surplus of said first combustible fluid being recirculated to said fuel cell system (1) along a first fluidic path, and surplus of said second combustible fluid being supplied from said fuel cell system (1) to a second fluidic path fluidically separated from said first fluidic path;
said recirculating assembly (4) comprising compressor means (12) arranged along said first fluidic path and operable to increase pressure of surplus of said first combustible fluid;
said recirculating assembly (4) being **characterized by**:
- drive means (11) arranged along said second fluidic path and operable to drive said compressor means (12).

**2.** An assembly as claimed 1, **characterized in that** said first combustible fluid contains hydrogen and **in that** said second combustible fluid contains oxygen.

**3.** An assembly as claimed in claim 1 or 2, **characterized by** magnetic connecting means (16) operable to angularly couple said drive means (11) and said compressor means (12).

**4.** An assembly as claimed in claim 3, **characterized in that** said magnetic connecting means (16) comprise a first and a second coupling portion (22a; 22b) which are integral with said drive means (11) and said compressor means (12) respectively, are coupled magnetically and are spaced apart.

**5.** An assembly as claimed in any one of the foregoing claims, **characterized in that** said drive means (11) and said compressor means (12) are housed in respective separate casings (18, 23; 20, 24) to prevent said combustible fluid mixing with said waste fluid.

**6.** An assembly as claimed in any one of the foregoing claims, **characterized in that** said drive means comprise a turbine (11) having an impeller (19) coated externally with, or made entirely of, corrosion-resistant material, or surface-treated to make it corrosion-resistant.

**7.** An assembly as claimed in any one of the foregoing claims, **characterized in that** said compressor means comprise a compressor (12) having an impeller (21) coated externally with, or made entirely of, corrosion-resistant material, or surface-treated to make it corrosion-resistant.

**8.** A fuel cell system (1) comprising:
- an electrochemical conversion unit (2) configured to receive first and second combustible fluids, and to supply electric energy and surplus of said first and second combustible fluids; and
- a recirculating assembly (4) as claimed in any one of the foregoing claims.
